# EUROPÄISCHE PATENTANMELDUNG

(11) **EP 0 594 113 A1**
(43) Veröffentlichungstag der Anmeldung: **27.04.1994**
(21) Anmeldenummer: 93116815.7
(22) Anmeldetag: 18.10.1993
(51) Int. Cl.: B60T 17/22, F16D 66/00

(54) **Verfahren zum Erfassen der Temperatur einer Scheibenbremse**

(30) Priorität: 20.10.1992 DE 4235364
(71) Anmelder: KNORR-BREMSE SYSTEME FÜR NUTZFAHRZEUGE GmbH, 80809 München (DE)
(72) Erfinder: Gerum, Eduard, Dr., D-83026 Rosenheim (DE)
(74) Vertreter: KUHNEN, WACKER & PARTNER

(57) **Zusammenfassung**

Es wird ein Verfahren zum Erfassen der Temperatur einer für ein Fahrzeug vorgesehenen Scheibenbremse beschrieben, die einen eine Bremsscheibe umfassenden Bremssattel aufweist, der bei Betätigung einer Zuspannvorrichtung beiderseits der Bremsscheibe angeordnete Bremsbacken gegen diese drückt und ein entsprechendes Bremsmoment erzeugt, wobei jede Betätigung der Zuspannvorrichtung mit der Erzeugung eines eine entsprechende Impulsdauer aufweisenden Bremssignal-Impulses einhergeht. Das erfindungsgemäße Verfahren weist die Schritte auf, daß bei Inbetriebnahme des Fahrzeugs als momentaner Temperaturwert ein Anfangswert eingestellt wird, während des Auftretens eines Bremssignal-Impulses ein den momentanen Belastungszustand der Bremse repräsentierendes Lastsignal erfaßt, hieraus die resultierende Temperaturerhöhung der Scheibenbremse ermittelt und der momentane Temperaturwert entsprechend dieser Temperaturerhöhung erhöht wird, und daß während derjenigen Zeitdauer, während der kein Bremssignal-Impuls auftritt, die in der Scheibenbremse abgeführte Wärmemenge berechnet, hieraus die resultierende Temperaturerniedrigung der Scheibenbremse ermittelt und der momentane Temperaturwert entsprechend dieser Temperaturerniedrigung verringert wird.

## Beschreibung

Die Erfindung bezieht sich auf ein Verfahren zum Erfassen der momentanen Temperatur einer für ein Fahrzeug vorgesehenen Scheibenbremse; das erfindungsgemäße Verfahren ist insbesondere vorteilhaft einsetzbar bei Straßennutzfahrzeugen, bei denen eine Überhitzung der Bremsanlage bekanntlich leichter auftritt als bei Personenkraftwagen.

Gattungsgemäße Scheibenbremsen, bei denen das erfindungsgemäße Verfahren angewandt werden kann, sind allgemein bekannt; derartige Scheibenbremsen weisen in der Regel einen eine Bremsscheibe umfassenden Bremssattel auf, der bei Betätigung einer Zuspannvorrichtung beiderseits der Bremsscheibe angeordnete Bremsbacken gegen diese drückt, wodurch infolge Reibung ein entsprechendes Bremsmoment erzeugt wird. Die Betätigung der Zuspannvorrichtung erfolgt entweder hydraulisch (bei Personenkraftwagen oder teilweise auch bei Omnibussen) oder pneumatisch bzw. mittels Druckluft bei Nutzfahrzeugen. Das erfindungsgemäße verfahren eignet sich zwar insofern insbesondere für den Einsatz in druckluftbetätigten Scheibenbremsen für Nutzfahrzeuge, als dort das Bremssystem durchschnittlich höheren Belastungen ausgesetzt ist und demzufolge leichter eine Überhitzung, insbesondere bei langen Bergabfahrten ohne Einsatz der Motorbremse, auftreten kann; jedoch kann das erfindungsgemäße Verfahren selbstverständlich auch für andere Arten von Scheibenbremsen verwendet werden.

Druckluftbetätigte Scheibenbremsen für Nutzfahrzeuge, bei denen, wie erwähnt, der hauptsächliche Nutzen des erfindungsgemäßen Verfahrens zu sehen ist, sind beispielsweise aus der **DE-OS 37 16 202** sowie aus der **DE-OS 40 32 885** bekannt, auf die hier vollinhaltlich bezug genommen sei. Bei diesen bekannten Scheibenbremsen weist die pneumatische Zuspannvorrichtung als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Zur Erhöhung der Betriebssicherheit von mit derartigen Scheibenbremsen ausgestatteten Fahrzeugen wurde bereits erwogen, die in der Bremse entwickelte Wärme zu erfassen, so daß bei einem Überhitzungszustand ein Warnsignal abgegeben werden kann, das den Fahrer dazu veranlaßt, die Weiterfahrt bis zum Abkühlen der Bremse ggf. zu unterbrechen. Insbesondere bei Nutzfahrzeugen besteht nämlich, wie eingangs erläutert, durchaus die Gefahr, daß ein noch unerfahrener Fahrer, wie insbesondere bei einer Bergabfahrt, die Bremse zu oft betätigt.

Um dementsprechend die in der Bremse entwickelte Wärme erfassen zu können, wurde vorgeschlagen, in der Bremse einen Wärmesensor, beispielsweise in unmittelbarer Nähe der Bremsscheibe, anzuordnen und das Ausgangssignal dieses Temperatursensors mittels eines geeigneten Anzeigeinstruments im Fahrerhaus als Temperaturwert anzuzeigen. Ferner wurde in Erwägung gezogen, das Ausgangssignal des Temperatursensors für eine geeignete Warnanzeige auszuwerten, die den Fahrer auf die mögliche Überhitzung der Bremse hinweist und dazu veranlaßt, das Fahrzeug bis zum Abkühlen der Bremse abzustellen. Ein derartiger Temperatursensor erhöht jedoch die Herstellungskosten der Bremse nicht unerheblich, wobei zu beachten ist, daß ebenfalls eine entsprechende Zuleitung zum Fahrerhaus bzw. zu einer Auswertungselektronik vorgesehen werden muß, wodurch die Störanfälligkeit erhöht wird.

Der Erfindung liegt die Aufgabe zugrunde, ein für eine druckluftbetätigte Scheibenbremse gemäß dem Oberbegriff des Anspruchs 1 geeignetes Temperaturerfassungsverfahren anzugeben, dessen Durchführung mit nur geringen Kosten verbunden ist und das eine geringe Störanfälligkeit aufweist.

Diese Aufgabe wird erfindungsgemäß mit den im Kennzeichnungsteil des Anspruchs 1 angegebenen Verfahrensschritten gelöst.

Die Erfindung beruht auf der Überlegung, daß die momentane Temperatur der Scheibenbremse in ausreichender Genauigkeit ggf. auch anhand der im Fahrzeug ohnehin bereits vorhandenen Meßsignale erfaßt werden kann. So ist es bereits bei allen Fahrzeugen üblich, bei jeder Betätigung der Bremse einen entsprechenden Bremssignal-Impuls zu erzeugen, der beispielsweise dazu dient, die Bremslichter anzusteuern. Ebenfalls wird bei jedem Fahrzeug die momentane Fahrgeschwindigkeit erfaßt und steht als Tachometersignal zur Verfügung; schließlich ist bei der Mehrzahl aller Fahrzeuge auch ein Meßsignal in Form eines Bremsdrucksignals vorhanden, das den momentanen hydraulischen bzw. pneumatischen Bremsdruck der Bremsanlage angibt. (Die hierzu verwendeten Signalgeber sind bekannt und bedürfen daher keiner näheren Erläuterung.)

Erfindungsgemäß wird demzufolge vorgeschlagen, die momentane Temperatur der Scheibenbremse unter Verwendung der vorstehend genannten, ohnehin bereits vorhandenen Meßsignale dadurch zu erfassen, daß [**a**] bei Inbetriebnahme des Fahrzeugs als momentaner Temperaturwert ein Anfangswert eingestellt wird, daß [**b**] während des Auftretens eines Bremssignal-Impulses [**b1**] ein den momentanen Belastungszustand der Bremse repräsentierendes Lastsignal erfaßt, [**b2**] hieraus die resultierende Temperaturerhöhung der Scheibenbremse ermittelt und [**b3**] der momentane Temperaturwert entsprechend dieser Temperaturerhöhung erhöht wird, und daß [**c**] während derjenigen Zeitdauer, während der kein Bremssignal-Impuls auftritt, [**c1**] die in der Scheibenbremse abgeführte Wärmemenge berechnet, [**c2**] hieraus die resultierende Temperaturerniedrigung der Scheibenbremse ermittelt und [**c3**] der momentane Temperaturwert entsprechend dieser Temperaturerniedrigung verringert wird.

Ausführliche Untersuchungen haben in der Tat gezeigt, daß mittels dieses Verfahrens eine relativ präzise und in der Praxis ausreichend genaue Erfassung der momentanen Temperatur der Scheibenbremse möglich ist; da die Scheibenbremse nämlich lediglich dahingehend überwacht werden muß, ob ein noch zulässiger Temperaturbereich von etwa 800°überschritten wird oder nicht, ist eine hier ohne weiteres erreichbare Meßgenauigkeit zwischen 10° und 50° völlig ausreichend.

Da das erfindungsgemäße Temperaturerfassungsverfahren einerseits keine zusätzlichen Signalgeber erforderlich macht und andererseits entweder mittels eines preiswerten Mikroprozessors oder mittels eines ohnehin vorhandenen Steuerungscomputers des Fahrzeugs durchgeführt werden kann, entstehen hierdurch praktisch keine bzw. lediglich vernachlässigbare Kosten. Darüber hinaus zeichnet sich das erfindungsgemäße Temperaturerfassungsverfahren durch hohe Zuverlässigkeit aus, da die der Messung zugrundeliegenden Eingangssignale allesamt von Sensoren geliefert werden, die keinen so hohen Belastungen ausgesetzt sind wie etwa ein an der Scheibenbremse angeordneter Temperatursensor.

Gemäß der im Anspruch 2 angegebenen Weiterbildung der Erfindung ist es beispielsweise möglich, im Schritt [**c1**] die abgeführte Wärmemenge durch Multiplikation der jeweiligen Zeitdauer mit einem konstanten Faktor zu berechnen, der unter Berücksichtigung der Größe und Einbaulage der Scheibenbremse sowie der Konvektion und Wärmeabstrahlung im voraus empirisch ermittelt und gespeichert werden kann.

Da gemäß der im Anspruch 3 angegebenen Weiterbildung der Erfindung das für die Erfassung des momentanen Lastzustands der Scheibenbremse im Schritt [**b1**] maßgebliche Lastsignal vorzugsweise ein Signal ist, das die Fahrzeuggeschwindigkeit mit der Anpreßkraft an der Bremsscheibe verknüpft, kann der Lastzustand, wie vorstehend erläutert, tatsächlich auf der Basis bereits zur Verfügung stehender Signale, nämlich des Tachometersignals und des Bremsdrucksignals, erfaßt werden. Im einzelnen wird daher im Schritt [**b2**] die Temperaturerhöhung der Scheibenbremse dadurch berechnet, daß die jeweilige Zeitdauer des Bremssignal-Impulses mit der Fahrzeuggeschwindigkeit (Tachometersignal), mit der Anpreßkraft (Bremsdrucksignal) sowie mit einem Reibungskoeffizienten zwischen der Bremsscheibe und den Bremsbacken multipliziert wird. Die Anpreßkraft an der Bremsscheibe kann dabei gemäß Anspruch 5 aus dem hydraulischen bzw. pneumatischen Druck (Bremsdrucksignal) und einem Faktor berechnet werden, der die Bremsauslegungsverhältnisse (Größe des Bremszylinders, Hebelübersetzungsverhältnis der Zuspannvorrichtung etc.) berücksichtigt.

Untersuchungen haben ferner gezeigt, daß der Reibungskoeffizient zwischen der Bremsscheibe und den Bremsbacken nur äußerst geringfügig schwankt und daher in der Praxis als konstant angesehen werden kann; es ist gemäß Anspruch 6 daher möglich, diesen Reibungskoeffizienten im voraus (für jeden Bremsbelag bzw. jeden Bremsentyp) empirisch zu ermitteln und zu speichern.

Da die Temperatur der Scheibenbremse bei ihrer Abkühlung, d.h. falls kein Bremsvorgang vorliegt, in der Praxis eine in der Regel durch die Umgebungstemperatur oder ggf. zusätzlich durch den kühlenden Fahrtwind vorgegebene untere Grenze nicht unterschreiten kann, empfiehlt es sich gemäß Anspruch 7, im Schritt [**c**] den momentanen Temperaturwert nur dann zu verringern, wenn dieser untere Grenzwert noch nicht erreicht ist.

Die Genauigkeit des erfindungsgemäßen Temperaturerfassungsverfahrens hängt maßgeblich von dem im Schritt [**a**] bei Inbetriebnahme des Fahrzeugs eingestellten Anfangswert des vom Meßverfahren kontinuierlich erhöhten oder verringerten "Momentanwerts" der Temperatur ab. In der Regel kann zwar bei der Inbetriebnahme des Fahrzeugs davon ausgegangen werden, daß die Scheibenbremse vollständig abgekühlt ist und demzufolge eine Temperatur aufweist, die dem unteren Grenzwert bzw. der Umgebungstemperatur entspricht; unter dieser Annahme könnte daher daran gedacht werden, bei der Inbetriebnahme grundsätzlich von einem vorgegebenen unteren Grenzwert bzw. der Umgebungstemperatur als Startwert auszugehen. Dieses Verfahren führt jedoch dann zu Meßfehlern oder Meßungenauigkeiten, wenn das Fahrzeug - beispielsweise nach einer längeren Bergabfahrt - mit vergleichsweise heißen Bremsen abgestellt und nach relativ kurzer Zeit wieder in Betrieb genommen wird, ohne daß sich die Scheibenbremsen wieder bis zur Umgebungstemperatur abgekühlt haben. In diesem Fall entspricht nämlich die als Startwert eingestellte Umgebungstemperatur nicht den tatsächlichen Verhältnissen, so daß das Temperaturerfassungsverfahren den korrekten Temperaturwerten gleichsam ständig "hinterherhinkt" und demzufolge zu niedrige Temperaturwerte anzeigt. Dies birgt die Gefahr, daß eine gefährliche Überhitzung der Scheibenbremse u.U. erst zu spät angezeigt wird.

Dieses Problem wird erfindungsgemäß dadurch gelöst, daß gemäß der im Anspruch 8 angegebenen Weiterbildung der Erfindung lediglich bei der ersten Inbetriebnahme des Fahrzeugs als momentaner Temperaturwert der untere Grenzwert bzw. die Umgebungstemperatur eingestellt wird, während bei Außerbetriebnahme des Fahrzeugs der Schritt [**c**], d.h. die Berechnung der zwischenzeitichen Abkühlung der Scheibenbremse, kontinuierlich mindestens solange durchgeführt wird, bis der untere Grenzwert erreicht ist, wobei bei jeder weiteren Inbetriebnahme des Fahrzeugs als Anfangswert der hierdurch errechnete Temperaturwert eingestellt wird. Auf diese Weise ist gewährleistet, daß das erfindungsgemäße Temperaturerfassungsverfahren auch bei einem abgestellten Fahrzeug einen eventuellen Abkühlvorgang korrekt erfaßt und bei Inbetriebnahme des Fahrzeugs vom korrekten Startwert ausgeht.

Gewisse Probleme können sich bei der vorgenannten Weiterbildung der Erfindung in der Praxis dadurch ergeben, daß es hierzu im Prinzip erforderlich ist, daß die Auswertungselektronik der zur Durchführung des Verfahrens verwendeten Steuervorrichtung ständig mit Strom versorgt werden muß, um die Berechnung der Abkühlung der Scheibenbremse durchzuführen. Wenn das Fahrzeug über einen längeren Zeitraum von beispielsweise mehreren Wochen nicht benutzt wird, ist es daher durchaus denkbar, daß diese kontinuierliche Stromversorgung der Auswertungselektronik die Ladung der Batterie schließlich vollständig aufbraucht, so daß das Fahrzeug ggf. nicht mehr angelassen werden kann.

Gemäß Anspruch 12 kann auch dieses Problem gelöst werden, wenn die zur Durchführung des Verfahrens verwendete Steuervorrichtung erfindungsgemäß so eingerichtet ist, daß sich die Auswertungselektronik bei Außerbetriebnahme des Fahrzeugs dann selbständig ausschaltet, wenn entweder der untere Grenzwert erreicht ist oder wenn eine vorbestimmte Zeitspanne seit der Außerbetriebnahme des Fahrzeugs verstrichen ist, wobei die Auswertungselektronik als momentanen Temperaturwert nur dann den unteren Grenzwert einstellt, wenn sie bei Inbetriebnahme des Fahrzeugs ausgeschaltet war. In diesem Fall verbraucht die Auswertungselektronik nur für eine vergleichsweise kurze Zeit nach der Außerbetriebnahme des Fahrzeugs Strom, so daß hierdurch keinerlei Batterieladungsprobleme auftreten können.

Die Erfindung wird nachstehend anhand der Beschreibung eines bevorzugten Ausführungsbeispiels unter Bezugnahme auf die Zeichnung näher erläutert. Es zeigen:
**Fig.1** anhand eines schematischen Flußdiagramms einen Haupt-Steuerungsablauf des erfindungsgemäßen Temperaturerfassungsverfahrens;
**Fig.2** anhand eines schematischen Flußdiagramms einen Steuerungsablauf zur Berechnung der jeweiligen Temperaturerhöhung;
**Fig.3** anhand eines schematischen Flußdiagramms einen Steuerungsablauf zur Berechnung der jeweiligen Temperaturerniedrigung; und
**Fig.4 und 5** jeweils anhand eines schematischen Flußdiagramms Steuerungsabläufe zur optimalen Einstellung eines Anfangswerts der Temperatur.

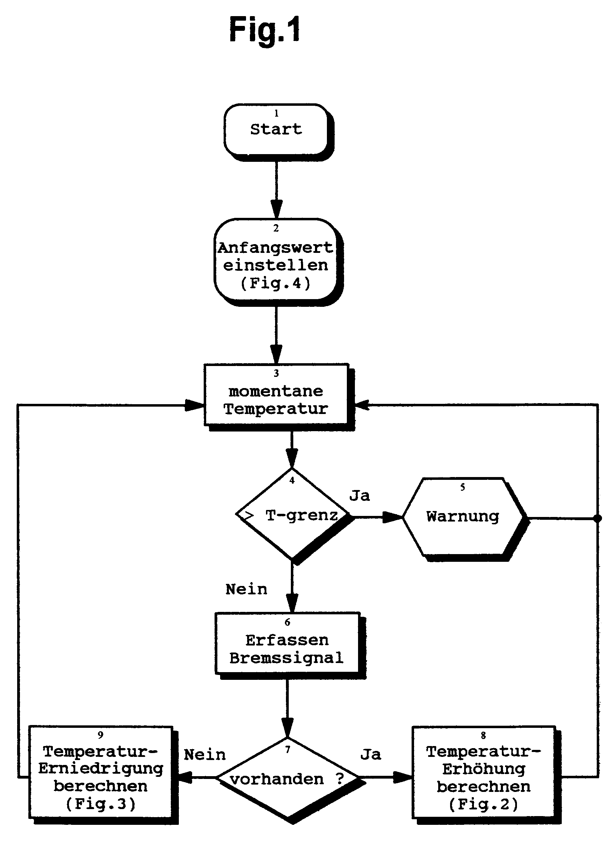

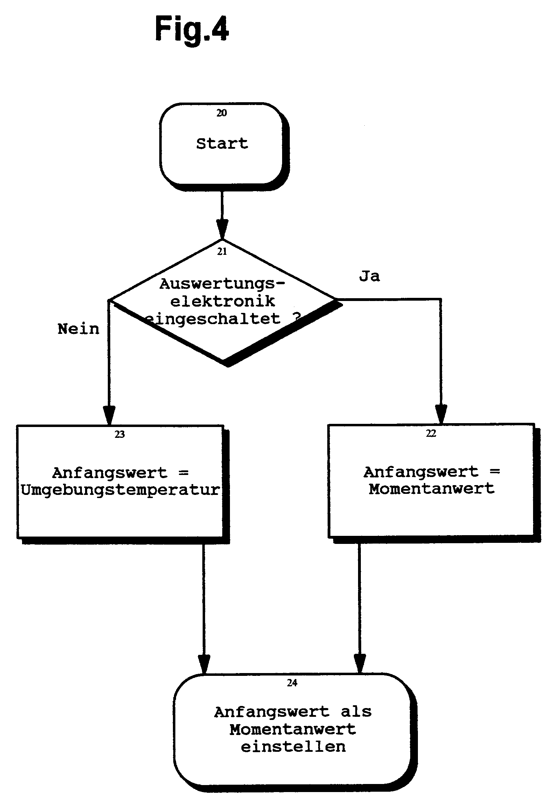

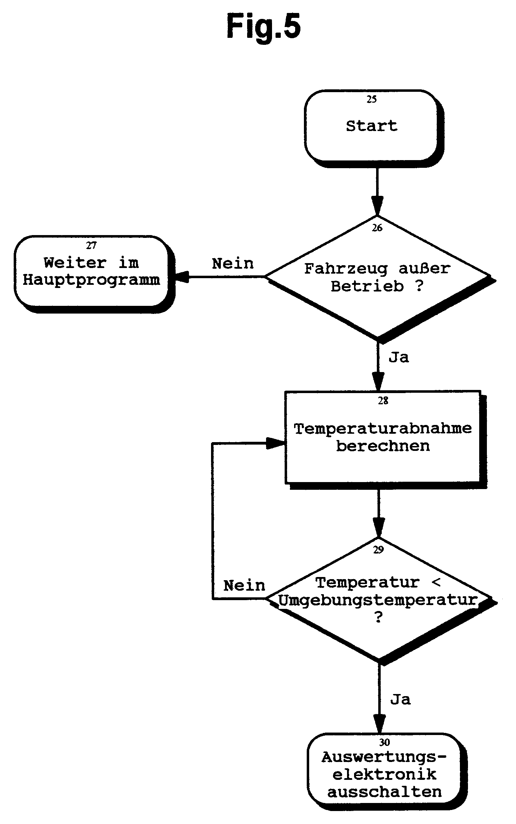

In Fig.1 ist schematisch der Ablauf einer Haupt-Steuerungsroutine des erfindungsgemäßen Temperaturerfassungsverfahrens gezeigt. Gemäß Fig.1 beginnt diese Routine in einem Schritt 1, der beispielsweise bei Inbetriebnahme des jeweiligen Fahrzeugs durchgeführt wird und bei dem allgemeine Initialisierungen zur Durchführung der Steuerung vorgenommen werden. In einem Folgeschritt 2, dessen Einzelheiten später unter Bezugnahme auf die Fig.4 und 5 noch näher erläutert werden, wird daraufhin ein bestimmter Anfangswert als "Istwert" vorgegeben, der in einem nachfolgenden Schritt 3 als momentaner Temperaturwert eingestellt wird.

Der Schritt 3 stellt demnach insofern einen zentralen Punkt der Steuerung dar, als diese Stelle der Steuerung stets die momentane Temperatur der Scheibenbremse wiederspiegelt. Daher schließt sich dem Schritt 3 ein Vergleichsschritt 4 an, bei dem der momentane Temperaturwert mit einem oberen Grenzwert "*T-grenz*" verglichen wird, der je nach Bedarf im voraus eingestellt worden ist. Bei Nutzfahrzeugen könnte ein realistischer Wert für "*T-grenz*" beispielsweise bei 800 ° liegen, da die Scheibenbremsen in der Regel bis zu dieser Temperatur belastet werden können. Falls festgestellt wird, daß die momentane Temperatur den oberen Grenzwert "*T-grenz*" überschreitet, wird in einem Schritt 5 eine entsprechende Warnung erzeugt, die beispielsweise in eine entsprechende optische und/oder akustische Warnanzeige im Führerhaus umgesetzt werden kann. Anstelle der oder zusätzlich zu den Schritten 4 und 5 ist es möglich, den momentanen Temperaturwert des Schritts 3 in ein Signal umzusetzen, das eine kontinuierliche Anzeige der momentanen Temperatur mittels eines entsprechenden Anzeigeinstruments ermöglicht.

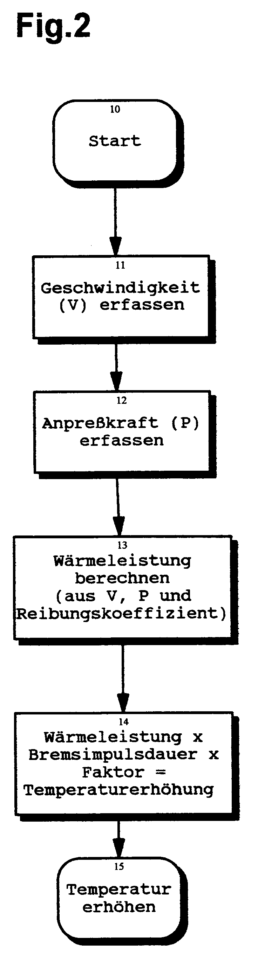

Dem Schritt 4 schließt sich ein Schritt 6 an, bei dem ein von der Betätigungsvorrichtung der Bremse bzw. dem Bremspedal erzeugtes Ausgangssignal erfaßt wird. Falls in einem sich anschließenden Vergleichsschritt 7 erkannt wird, daß dieses Ausgangssignal einen Bremssignal-Impuls enthält, d.h. daß das Ausgangssignal ein Bremssignal darstellt, wird in einem Schritt 8 berechnet, um wieviel sich die momentane Temperatur der Scheibenbremse infolge des dem Bremssignal zugrundeliegenden Bremsvorgangs erhöht hat. Die Einzelheiten des Schritts 8 werden später unter Bezugnahme auf Fig.2 noch näher erläutert. Nach Durchführung des Schritts 8 wird wieder zum Schritt 3 zurückverzweigt, wo der momentane Temperaturwert entsprechend aktualisiert wird.

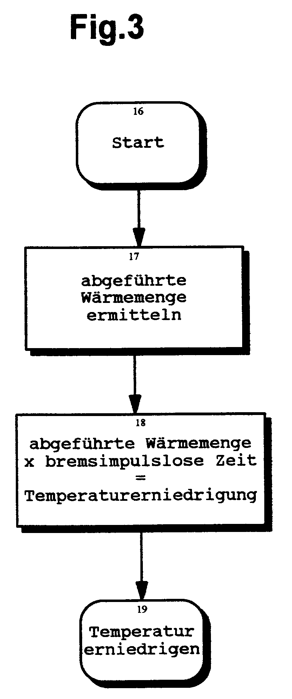

Falls im Vergleichsschritt 7 demgegenüber festgestellt wird, daß das Vom Bremspedal erzeugte Ausgangssignal kein Bremssignal darstellt, d.h. daß momentan nicht gebremst wird, wird in einem Schritt 9, dessen Einzelheiten später unter Bezugnahme auf Fig.3 noch näher erläutert werden, die sich aufgrund der Abkühlung der Bremse ergebende Temperaturerniedrigung berechnet. Nach Durchführung des Schritts 8 wird ebenfalls zum Schritt 3 zurückverzweigt, wo der momentane Temperaturwert entsprechend aktualisiert wird.

Aus der vorstehenden Beschreibung ist in Verbindung mit dem Flußdiagramm der Fig.1 ersichtlich, daß der Haupt-Steuerungsablauf um den Schritt 3 herum eine Endlos-Schleife bildet, so daS der momentane Temperaturwert unter stetiger Berücksichtigung der Bremsvorgänge und Abkühlperioden der Scheibenbremse kontinuierlich auf dem aktuellen Wert gehalten wird. Falls zur Durchführung des erfindungsgemäßen Verfahrens kein eigener Rechner bzw. Prozessor, sondern vielmehr ein bereits vorhandener Rechner des Fahrzeugs verwendet wird, empfiehlt es sich, diese zentrale Schleife im Rahmen einer Unterbrechungs- bzw. Interupt-Routine durchzuführen, die in regelmäßigen zeitlichen Abständen, wie etwa alle 100 ms aufgerufen wird. Auf diese Weise kann das erfindungsgemäße Verfahren durchgeführt werden, ohne die anderen Steuerungsfunktionen des Fahrzeugrechners in nennenswertem Maße zu beeinträchtigen. Gegebenenfalls läßt sich daher eine Temperaturerfassung ohne zusätzliche Komponenten erreichen, so daß sich der Aufwand auf eine geeignete einmalige Programmierung des Fahrzeugrechners beschränkt.

In Fig.2 ist der Schritt 8 der Fig.1, der zur Berechnung der Temperaturerhöhung bei Vorliegen eines Bremssignal-Impulses dient, im einzelnen gezeigt. Gemäß Fig.2 wird in einem Anfangsschritt 10 eine Initialisierung durchgeführt; beispielsweise könnte es sich hierbei um das Zurückladen gespeicherter Werte handeln, falls die Steuerung, wie oben erwähnt, im Rahmen einer Interupt-Routine durchgeführt wird.

In einem Folgeschritt 11 wird daraufhin anhand eines Tachometersignals die momentane Geschwindigkeit **V** des Fahrzeugs erfaßt. Anschließend wird in einem Schritt 12 die Anpreßkraft **P** der Bremsbacken an der Bremsscheibe ermittelt. Die Anpreßkraft **P** an der Bremsscheibe wird hierbei anhand eines Signals, das den hydraulischen bzw. pneumatischen Druck wiedergibt und beispielsweise von einem am Bremsventil angeordneten Sensor abgeleitet sein kann, sowie anhand eines Faktors berechnet, der die jeweiligen Bremsauslegungsverhältnisse berücksichtigt, nämlich insbesondere die Größe des Bremszylinders sowie das Übersetzungsverhältnis der Zuspannvorrichtung der Scheibenbremse.

Es sei darauf hingewiesen, daß die Reihenfolge der Schritte 11 und 12 selbstverständlich geändert werden kann. Beide Signale, nämlich die momentane Geschwindigkeit **V** und Anpreßkraft **P**, ergeben zusammen ein Signal, das die momentane Belastung der Bremse wiedergibt.

In einem sich an den Schritt 12 anschließenden Schritt 13 wird die in die Scheibenbremse eingebrachte Wärmeleistung berechnet, indem die momentane Fahrzeuggeschwindigkeit **V** mit der Anpreßkraft **P** sowie mit einem bestimmten Faktor multipliziert wird, der den Reibungskoeffizienten zwischen den Bremsbacken und der Bremsscheibe wiedergibt. Dieser Faktor für den Reibungskoeffizienten kann im voraus empirisch ermittelt und gespeichert werden; Untersuchungen haben nämlich ergeben, daß der Reibungskoeffizient zwischen der Bremsscheibe und den Bremsbacken nur äußerst geringfügig schwankt und daher in der Praxis als konstant angesehen werden kann.

In einem weiteren Schritt 14 wird schließlich die im Schritt 13 ermittelte Wärmeleistung mit der zeitlichen Dauer des Bremsimpulses durch Multiplikation verknüpft, wobei in die Multiplikation weiterhin ein bestimmter, i voraus empirisch ermittelter und gespeicherter Faktor einfließt, der die Wärmespeicherkapazität der Bremse und dergleichen wiedergibt, so daß im Ergebnis ein Wert erhalten wird, der die Temperaturerhöhung der Scheibenbremse angibt. Da die Routine der Fig.2 während eines jeweiligen Bremsvorgangs entsprechend der Häufigkeit der Interupt-Routine mehrmals durchgeführt wird, werden auch Änderungen in der Bremsbelastung berücksichtigt; es ist nämlich oftmals der Fall, daß der Fahrer während des Bremsens die Bremskraft ändert. Unter dem Begriff "zeitliche Dauer des Bremsimpulses" ist in diesem Fall selbstverständlich der zeitliche Abstand zwischen zwei aufeinanderfolgenden Durchführungen der Routine der Fig.2 zu verstehen, wobei die tatsächliche Dauer des Bremsvorgangs die Summe dieser Zeitdauern darstellt.

In einem Schritt 15 wird schließlich die momentane Temperatur entsprechend der im Schritt 14 ermittelten Temperaturerhöhung angepaßt und findet durch Rücksprung zum Schritt 3 der Fig.1 Berücksichtigung bei der Überwachung hinsichtlich einer eventuellen Überhitzung der Bremse.

In Fig.3 ist der Schritt 9 der Fig.1, der zur Berechnung der Temperaturerniedrigung im bremsfreien Zustand dient, im einzelnen gezeigt. Gemäß Fig.3 wird in einem Anfangsschritt 16 eine Initialisierung durchgeführt; wie im Falle des Schritts 10 der Fig.2 kann es sich hierbei um das Zurückladen gespeicherter Werte handeln, falls die Steuerung, wie oben erwähnt, im Rahmen einer Interupt-Routine durchgeführt wird.

In einem Folgeschritt 17 wird daraufhin die abgeführte Wärmemenge ermittelt, und zwar unter Heranziehung eines konstanten Faktors, der unter Berücksichtigung der Größe und Einbaulage der Scheibenbremse sowie der Konvektion und Wärmeabstrahlung im voraus empirisch ermittelt und gespeichert worden ist. Untersuchungen haben nämlich gezeigt, daß der Vorgang der Abkühlung der Bremse einen ausreichend konstanten Verlauf hat und daher auf diese Weise rechnerisch berücksichtigt werden kann.

In einem sich anschließenden Schritt 18 wird daraufhin die resultierende Temperaturerniedrigung bzw. -abnahme der Scheibenbremse ermittelt, und zwar indem die jeweilige Zeitdauer des bremsfreien Zustands bzw. des Abstands zur vorhergehenden Durchführung dieser Routine mit dem die abgeführte Wärmemenge angebenden konstanten Faktor multipliziert wird. Falls erfaßt wird, daS die Scheibenbremse bereits einen unteren Grenzwert, nämlich in der Regel die Umgebungstemperatur erreicht hat, wird keine Anpassung des momentanen Temperaturwerts vorgenommen, da davon ausgegangen wird, daß sich die Scheibenbremse unter diesen Wert praktisch nicht abkühlen kann (zusätzliche Kühleffekte durch den Fahrtwind sind bei der hier geforderten Genauigkeit in der Praxis vernachlässigbar). Andernfalls wird in einem Schritt 19 der momentane Temperaturwert entsprechend der Berechnung des Schritts 18 verringert.

Da die Genauigkeit des erfindungsgemäßen Temperaturerfassungsverfahrens maßgeblich von dem im Schritt 2 der Fig.1 bei Inbetriebnahme des Fahrzeugs eingestellten Anfangswert abhängt, wird dieser Schritt entsprechend der Darstellung in den Fig.4 und 5 durchgeführt. Gemäß Fig.4 wird nach Durchführung eines initialisierenden Startschritts 20 bei der Inbetriebnahme des Fahrzeugs in einem Schritt 21 zunächst geprüft, ob die jeweilige Auswertungselektronik (Prozessor, Fahrzeugrechner oder dergleichen) noch eingeschaltet ist. Falls dies der Fall ist, wird zu einem Schritt 22 verzweigt, bei dem als Anfangswert der momentan in der Auswertungselektronik vorliegende Temperaturwert herangezogen wird, d.h. dieser Wert wird nicht geändert. Wenn im Schritt 21 hingegen festgestellt wird, daß die Auswertungselektronik ausgeschaltet ist, wird zu einem Schritt 23 verzweigt, bei dem als Anfangswert der untere Grenzwert, nämlich vorzugsweise die Umgebungstemperatur eingestellt wird. In einem letzten Schritt 24 wird schließlich der jeweils herangezogene Anfangswert als Momentanwert der Temperatur eingestellt und dem Schritt 3 der Fig.1 als solcher übergeben.

Die erwähnte Überprüfung auf den Einschaltzustand der Auswertungselektronik ist auf die erfindungsgemäße Durchführung der Phase nach der Außerbetriebnahme des Fahrzeugs zurückzuführen, die nunmehr unter Bezugnahme auf die Fig.5 näher erläutert wird. Gemäß Fig.5 wird nach einem Anfangsschritt 25 in einem Schritt 26 zunächst geprüft, ob das Fahrzeug außer Betrieb ist oder nicht. In letzterem Fall wird zu einem Schritt 27 verzweigt, bei dem zum Hauptprogramm, nämlich zur Schleife 3 des Steuerungsablaufs der Fig.1 zurückgesprungen wird. Andernfalls wird zu einem Schritt 28 verzweigt, bei dem in Übereinstimmung mit den anhand der Fig.3 erläuterten Verfanrensschritten die Temperaturabnahme der Scheibenbremse solange berechnet wird, bis in einem Folgeschritt 29 erfaßt wird, daß diese Temperatur den unteren Grenzwert, nämlich vorzugsweise die Umgebungstemperatur, erreicht hat. Wenn dies der Fall ist, wird in einem Schritt 30 die Auswertungselektronik ausgeschaltet bzw. schaltet sich selbst aus.

Durch die genannte Ausschaltung der Auswertungselektronik wird erreicht, daß diese nicht länger als nötig Strom benötigt und somit die Fahrzeugbatterie nicht unnötig belastet; gleichwohl kann die Anfangstemperatur stets genau eingestellt werden. Insbesondere ist auch gewährleistet, daß das erfindungsgemäße Temperaturerfassungsverfahren selbst bei einem abgestellten Fahrzeug einen eventuellen Abkühlvorgang noch korrekt erfaßt und bei Inbetriebnahme des Fahrzeugs vom zutreffenden Startwert ausgeht.

In Abwandlung zum Schritt 29, bei dem das Erreichen der unteren Temperaturgrenze geprüft wird, ist es auch möglich, den Schritt 28 für eine vorgegebenen Zeitdauer durchzuführen; diese sollte so bemessen sein, daß davon ausgegangen werden kann, daß die Scheibenbremse inzwischen vollständig ausgekühlt ist.

In der vorstehenden Beschreibung wurde mehrfach erwähnt, daß als unterer Grenzwert vorzugsweise die Umgebungstemperatur herangezogen wird. Falls ein entsprechender Sensor jedoch nicht zur Verfügung steht und auch nicht beabsichtigt ist, die Temperaturerfassung durch zusätzliches Vorsehen eines solchen Sensors mit Mehrkosten zu belasten, kann auch in Erwägung gezogen werden, von einem fest vorgegebenen unteren Grenzwert auszugehen. Dieser muß dann so gewählt werden, daß eine Überhitzung der Scheibenbremse unter allen Umständen rechtzeitig angezeigt wird; so ist es denkbar, z.B. einen vergleichsweise hohen Startwert von 30° bis 40 ° zu wählen, der selbst im Sommer eine etwas vorzeitige Temperaturwarnung bewirkt. Jedoch ist bei dem zulässigen Temperaturbereich einer Scheibenbremse von bis zu 800° selbst eine dann im Winter auftretende zu frühe Warnung von mehr als 50° noch akzeptabel, d.h. die dann erzielbare Meßgenauigkeit von 50° ist für das Anwendungsgebiet der Erfindung meist noch ausreichend.

Bezüglich noch weiterer Vorteile der Erfindung wird ausdrücklich auf die Zeichnung verwiesen, auf deren Offenbarungsgehalt vollinhaltlich Bezug genommen wird.

## Patentansprüche

1. Verfahren zum Erfassen der Temperatur einer für ein Fahrzeug vorgesehenen Scheibenbremse, die einen eine Bremsscheibe umfassenden Bremssattel aufweist, der bei Betätigung einer Zuspannvorrichtung beiderseits der Bremsscheibe angeordnete Bremsbacken gegen diese drückt und ein entsprechendes Bremsmoment erzeugt, wobei jede Betätigung der Zuspannvorrichtung mit der Erzeugung eines eine entsprechende Impulsdauer aufweisenden Bremssignal-Impulses einhergeht,
***dadurch gekennzeichnet***, daß
[**a**] bei Inbetriebnahme des Fahrzeugs als momentaner Temperaturwert ein Anfangswert eingestellt wird,
[**b**] während des Auftretens eines Bremssignal-Impulses
[**b1**] ein den momentanen Belastungszustand der Bremse repräsentierendes Lastsignal erfaßt,
[**b2**] hieraus die resultierende Temperaturerhöhung der Scheibenbremse ermittelt und
[**b3**] der momentane Temperaturwert entsprechend dieser Temperaturerhöhung erhöht wird, und daß
[**c**] während derjenigen Zeitdauer, während der kein Bremssignal-Impuls auftritt,
[**c1**] die in der Scheibenbremse abgeführte Wärmemenge berechnet,
[**c2**] hieraus die resultierende Temperaturerniedrigung der Scheibenbremse ermittelt und
[**c3**] der momentane Temperaturwert entsprechend dieser Temperaturerniedrigung verringert wird.

2. Verfahren nach Anspruch 1, ***dadurch gekennzeichnet***, daß im Schritt [**c1**] die abgeführte Wärmemenge durch Multiplikation der jeweiligen Zeitdauer mit einem konstanten Faktor berechnet wird, der unter Berücksichtigung der Größe und Einbaulage der Scheibenbremse sowie der Konvektion und Wärmeabstrahlung im voraus empirisch ermittelt und gespeichert worden ist.

3. Verfahren nach Anspruch 1 oder 2, ***dadurch gekennzeichnet***, daß das im Schritt [**b1**] herangezogene Lastsignal ein Signal ist, das die Fahrzeuggeschwindigkeit mit der Anpreßkraft an der Bremsscheibe verknüpft.

4. Verfahren nach Anspruch 3, ***dadurch gekennzeichnet***, daß im Schritt [**b2**] die Temperaturerhöhung der Scheibenbremse durch Multiplikation der jeweiligen Zeitdauer des Bremssignal-Impulses mit der Fahrzeuggeschwindigkeit, mit der Anpreßkraft und mit einem Reibungskoeffizienten zwischen der Bremsscheibe und den Bremsbacken berechnet wird.

5. Verfahren nach Anspruch 3 oder 4, ***dadurch gekennzeichnet***, daß die Anpreßkraft an der Bremsscheibe aus dem hydraulischen oder pneumatischen Druck und einem Faktor berechnet wird, der die Bremsauslegungsverhältnisse (Größe des Bremszylinders, Hebelübersetzungsverhältnis der Zuspannvorrichtung usw.) berücksichtigt.

6. Verfahren nach Anspruch 4 oder 5, ***dadurch gekennzeichnet***, daß der Reibungskoeffizient zwischen der Bremsscheibe und den Bremsbacken im voraus empirisch ermittelt und gespeichert wird.

7. Verfahren nach einem der Ansprüche 1 bis 6, ***dadurch gekennzeichnet***, daß im Schritt [**c**] der momentane Temperaturwert nur dann verringert wird, wenn kein unterer Grenzwert erreicht ist.

8. Verfahren nach einem der Ansprüche 1 bis 7, ***dadurch gekennzeichnet***, daß im Schritt [**a**]:
[**a1**] bei der ersten Inbetriebnahme des Fahrzeugs als momentaner Temperaturwert ein unterer Grenzwert eingestellt wird,
[**a2**] bei Außerbetriebnahme des Fahrzeugs der Schritt [**c**] kontinuierlich solange durchgeführt wird, bis der untere Grenzwert erreicht ist, und
[**a3**] bei jeder weiteren Inbetriebnahme des Fahrzeugs als Anfangswert der im Schritt [**a2**] errechnete Temperaturwert eingestellt wird.

9. Verfahren nach Anspruch 7 oder 8, ***dadurch gekennzeichnet***, daß als unterer Grenzwert die Umgebungstemperatur herangezogen wird.

10. Verfahren nach Anspruch 7 oder 8, ***dadurch gekennzeichnet***, daß als unterer Grenzwert ein vorbestimmter Wert herangezogen wird.

11. Verfahren nach einem der Ansprüche 1 bis 10, ***dadurch gekennzeichnet***, daß ein Warnsignal erzeugt wird, wenn der im Schritt [**b**] ermittelte Temperaturwert einen vorbestimmten Grenzwert überschreitet.

12. Steuervorrichtung zur Durchführung des Verfahrens nach einem der Ansprüche 1 bis 11, mit einer von der Fahrzeugbatterie gespeisten Auswertungselektronik, ***dadurch gekennzeichnet***,
[**a**] daß sich die Auswertungselektronik bei Außerbetriebnahme des Fahrzeugs dann ausschaltet, wenn der untere Grenzwert erreicht ist oder wenn eine vorbestimmte Zeitspanne seit der Außerbetriebnahme verstrichen ist,
[**b**] und daß die Auswertungselektronik als momentanen Temperaturwert nur dann den unteren Grenzwert einstellt, wenn sie bei Inbetriebnahme des Fahrzeugs ausgeschaltet war.
